(19) Europäisches Patentamt
European Patent Office
Office européen des brevets

(11) **EP 3 651 067 A1**

(12) **EUROPEAN PATENT APPLICATION**

(43) Date of publication:
**13.05.2020 Bulletin 2020/20**

(21) Application number: **19208349.1**

(22) Date of filing: **11.11.2019**

(51) Int Cl.:
***G06K 9/62*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.11.2018 JP 2018212304**

(71) Applicant: **ISHIDA CO., Ltd.**
**Kyoto-shi,**
**Kyoto 606-8392 (JP)**

(72) Inventors:
- **TSUTSUMI, Hironori**
  **Ritto-shi, Shiga 520-3026 (JP)**
- **HIROSE, Osamu**
  **Ritto-shi, Shiga 520-3026 (JP)**
- **TARUMOTO, Yoshinori**
  **Ritto-shi, Shiga 520-3026 (JP)**

(74) Representative: **Global IP Europe**
**Patentanwaltskanzlei**
**Pfarrstraße 14**
**80538 München (DE)**

(54) **TRAINING DATA GENERATION METHOD, TRAINING DATA GENERATION APPARATUS, AND PRODUCT IDENTIFICATION APPARATUS**

(57) [Problem]
To enable overlapping products to be distinguished.
[Solution]
A method of generating training data 40 is a method of generating training data 40 used to generate a computing unit X for a product identification apparatus 10 that computes, from a group image in which there are one or more types of products G, the quantities of each of the products G included in the group image. The training data 40 includes plural learning group images 41 and labels 42 assigned to each of the plural learning group images 41. The method of generating the training data 40 includes a first step of acquiring individual images 43al to 43a6, 43b1 to 43b6, 43c1 to 43c6 in each of which there is one product G of one type and a second step of generating the plural learning group images 41 including one or more of the products G by randomly arranging the individual images. The plural learning group images 41 generated in the second step include learning group images 41 in which the individual images at least partially overlap each other.

T
G1
G1
20
CROISSANT
50
N
60
FIG. 10

EP 3 651 067 A1

## Description

## BACKGROUND

### Technical Field

This disclosure relates to a training data generation method, a training data generation apparatus, and a product identification apparatus.

### Related Art

Patent document 1 (JP-A No. 2017-27136) discloses a shop system that identifies products by image recognition. The system is expected to be applied in store checkout counters, for example.

## SUMMARY

### Technical Problem

When capturing an image in which there is more than one product, sometimes the products partially overlap each other. In such cases, this poses an obstacle for conventional image processing to distinguish between the plural products that overlap each other. This problem is also the same in image processing using machine learning, which has been receiving attention in recent years.

It is a problem of this disclosure to enable a product identification apparatus that identifies plural products to distinguish between overlapping products when using machine learning to train a computing unit that computes the quantities of the products.

### Solution to Problem

A training data generation method pertaining to a first aspect is used to generate a computing unit for a product identification apparatus that computes, from a group image in which there are one or more types of products, the quantities of each type of the products included in the group image. The training data includes plural learning group images and labels assigned to each of the plural learning group images. The training data generation method comprises a first step of acquiring individual images in each of which there is one product of one type and a second step of generating the plural learning group images including one or more of the products by randomly arranging the individual images. The plural learning group images generated in the second step include learning group images in which the individual images at least partially overlap each other.

According to this method, at least some of the learning group images are learning group images in which the individual images at least partially overlap each other. Consequently, training image data configuring the computing unit capable of identifying the overlapping products can be obtained. "More (than one) types of products" may include different plural types of the same products, or may include different products. Regarding the former, an example of the same products is "loaves of bread" whereas examples of the different plural types are "croissant" and "cornbread square". Regarding the latter, examples of the different plural products are "croissant" and "cornbread square".

A training data generation method pertaining to a second aspect is the training data generation method pertaining to the first aspect, further comprising a third step of assigning, as the labels to the learning group images, the quantities and/or the positional information of each type of the products included in the learning group images generated in the second step.

According to this method, the training data includes as the labels the quantities of each of the products. Consequently, the computing unit can be trained to be able to identify the quantities of the products.

A training data generation method pertaining to a third aspect is the training data generation method pertaining to the first or second aspect, in which the labels including information that specifies each type of the products are generated.

According to this method, the information that specifies each product and the quantity of the products, or else the information that specifies each type of the products and the quantity of the products of the same type, are associated with each other and included in the labels.

A training data generation method pertaining to a fourth aspect is the training data generation method pertaining to any one of the first to third aspects, further comprising a third step of assigning, as the labels to the learning group images, coordinates of centroids corresponding to each of the individual images included in the learning group images generated in the second step.

According to this method, the training data includes as the labels the coordinates of the centroids of the individual images. Consequently, the computing unit can be trained to not mistake plural products for a single product.

A training data generation method pertaining to a fifth aspect is the training data generation method pertaining to any one of the first to fourth aspects, further comprising a third step of assigning, as the labels to the learning group images, replacement images in which each of the individual images included in the learning group images generated in the second step have been replaced with corresponding representative images.

According to this method, the training data includes as the labels the replacement images in which the individual images have been replaced with the representative images.

A training data generation method pertaining to a sixth aspect is the training data generation method pertaining to the fifth aspect, wherein the representative images are pixels representing centroids of each of the individual images.

According to this method, the training data includes as the labels the replacement images in which the individual images have been replaced with their centroid pixels.

A training data generation method pertaining to a seventh aspect is the training data generation method pertaining to the fifth aspect, wherein the representative images are outlines of each of the individual images. According to this method, the training data includes as the labels the replacement images in which the individual images have been replaced with their outlines.

A training data generation method pertaining to an eighth aspect is a method of generating training data configured to count a quantity of each product included in an image including one or more different products, the method comprising: a first step of acquiring information that specifies individual images of each product included in the one or more products and the products; a second step of generating plural learning group images such that each learning group image includes the one or more products by randomly arranging the individual images; and a third step of generating, for each learning group image, a label including information that specifies each product corresponding to each individual image arranged in each learning group image included in the plural learning group images and information that specifies a quantity and/or a position of each product in each learning group image; wherein, in each of the plural learning group images generated in the second step, at least part of the individual images partially overlap each other.

This method produces functions and effects similar to those of the training data generation method pertaining to any one of the first to fifth aspects.

A training data generation method pertaining to a ninth aspect is the training data generation method pertaining to the eighth aspect, wherein, in the labels, the information that specifies the quantity and/or the position of each product in each learning group image is information that specifies a coordinate or a pixel of a center of gravity of each individual image included in each learning group image.

This method produces functions and effects similar to those of the training data generation method pertaining to the sixth aspect.

A training data generation method pertaining to a tenth aspect is the training data generation method pertaining to the eighth aspect, wherein, in the labels, the information that specifies the quantity and/or the position of each product in each learning group image is information that specifies pixels forming an outline of the product in each individual image included in each learning group image.

This method produces functions and effects similar to those of the training data generation method pertaining to the seventh aspect.

In the training data generation method pertaining to a tenth aspect, it is preferable that the information that specifies the quantity of each product in each learning group image is computed based on the number of pixels forming an outline of the product, and is associated with the pixels forming the outline of the product.

A training data generation method pertaining to a eleventh aspect is the training data generation method pertaining to any one of the first aspect to the tenth aspect, wherein in the second step a designation regarding an upper limit and/or a lower limit of an overlap ratio defined by the ratio of an area of overlap with respect to the area of the individual images is received.

According to this method, the degree of overlap between the individual images in the learning group images is designated. Consequently, learning by the computing unit suited to degrees of overlap that can realistically occur is possible.

A training data generation method pertaining to an twelfth aspect is the training data generation method pertaining to any one of the first aspect to the eleventh aspect, wherein in the second step at least one of a process that enlarges or reduces the individual images at random rates, a process that rotates the individual images at random angles, a process that changes the contrast of the individual images at random degrees, and a process that randomly inverts the individual images is performed per individual image when arranging the individual images.

According to this method, the volume of the training data increases. Consequently, the recognition accuracy of the computing unit can be improved.

A training data generation method pertaining to a thirteenth aspect is the training data generation method pertaining to any one of the first aspect to the twelfth aspect, wherein the products are food products.

According to this method, the recognition accuracy of the computing unit can be improved in regard to food products.

A training data generation method pertaining to a fourteenth aspect is the training data generation method pertaining to any one of the first aspect to the thirteenth aspect, wherein information that specifies each product included in the learning group images and the quantity and/or positional information of the products in the learning group images are output based on the label generated for an arbitrary learning group image included in the one or more learning group images.

For example, if the generated label is output as an image, it is possible to evaluate the appropriateness of the label or the progress level of the learning by comparing the generated label and the corresponding learning group image.

A training data generation method pertaining to a fifteenth aspect is the training data generation method pertaining to any one of the first aspect to the fourteenth aspect, further comprising an output step of outputting and/or writing in a storage medium the training data including at least the plural learning group images generated in the second step and the respective labels for the plural learning group images.

With this method, it is possible to use the output training data for identification of the products.

A training data generation program pertaining to another aspect of the present invention is used to generate a computing unit for a product identification apparatus that computes, from a group image in which there are one or more types of products, the quantities of each type of the products included in the group image. The training data includes plural learning group images and labels assigned to each of the plural learning group images. The training data generation program causes a computer to function as an individual image acquisition unit that acquires individual images in each of which there is one product of one type and a learning group image generation unit that generates the plural learning group images including one or more of the products by randomly arranging the individual images. Included among the learning group images are learning group images in which the individual images at least partially overlap each other.

According to this configuration, at least some of the learning group images are learning group images in which the individual images at least partially overlap each other. Consequently, training image data configuring the computing unit capable of identifying the overlapping products can be obtained.

A training data generation apparatus pertaining to an sixteenth aspect is used to generate a computing unit for a product identification apparatus that computes, from a group image in which there are one or more types of products, the quantities of each type of the products included in the group image. The training data includes plural learning group images and labels assigned to each of the plural learning group images. The training data generation apparatus comprises an individual image acquisition unit that acquires individual images in each of which there is one product of one type and a learning group image generation unit that generates the plural learning group images including one or more of the products by randomly arranging the individual images. The learning group image generation unit causes the individual images to at least partially overlap each other.

This apparatus corresponds to the method pertaining to the first aspect. According to this configuration, at least some of the learning group images are learning group images in which the individual images at least partially overlap each other. Consequently, training image data configuring the computing unit capable of identifying the overlapping products can be obtained.

Another aspect provides an apparatus of generating training data configured to count a quantity of each product included in an image including one or more different products, the apparatus comprising: an acquiring means that acquires information that specifies individual images of each product included in the one or more products and the products; a group image generating means that generates plural learning group images such that each learning group image includes the one or more products by randomly arranging the individual images; and a label generating means that generates, for each learning group image, a label including information that specifies each product corresponding to each individual image arranged in each learning group image included in the plural learning group images and information that specifies a quantity and/or a position of each product in each learning group image; wherein the group image generating means generates the plural learning group images such that, in each of the plural learning group images generated, at least part of the individual images partially overlap each other.

This apparatus corresponds to the method pertaining to the eighth aspect.

A product identification apparatus pertaining to a seventeenth aspect computes, from a group image in which there are one or more types of products, the quantities of each type of the products included in the group image. The product identification apparatus comprises a camera and a neural network that processes output from the camera. The neural network learns using the training data generated using the training data generation method pertaining to any one of the first aspect to the fifteenth aspect. In other words, the training data includes plural learning group images and labels assigned to each of the plural learning group images. The plural learning group images include learning group images in which the individual images at least partially overlap each other.

According to this configuration, the training data including the individual images of the plural products that overlap each other is used in the learning by the neural network. Consequently, the recognition accuracy of the neural network is improved.

## Advantageous Effects

According to this disclosure, training image data configuring a computing unit capable of identifying overlapping products can be obtained.

## BRIEF DESCRIPTION OF THE DRAWINGS

FIG. 1 is a schematic drawing showing a product identification apparatus 10.
FIG. 2 is a block diagram of an identification computer 30.
FIG. 3 is a schematic drawing showing training data 40.
FIG. 4 is a schematic drawing showing individual images 43a to 43c.
FIG. 5 is a schematic drawing showing a learning phase of the product identification apparatus 10.
FIG. 6 is a schematic drawing showing an inference phase of the product identification apparatus 10.
FIG. 7 is a schematic drawing showing a training data generation apparatus 50 pertaining to a first embodiment of this disclosure.
FIG. 8 is a block diagram of a generation computer 60.
FIG. 9 is a flowchart of a method of generating the training data 40.
FIG. 10 is a schematic drawing showing the method of generating the training data 40 (imaging for acquiring the individual images) pertaining to the first embodiment.
FIG. 11 is a schematic drawing showing the method of generating the training data 40 (cutting out the individual images) pertaining to the first embodiment.
FIG. 12 is a schematic drawing showing the method of generating the training data 40 (generating a learning group image and assigning a label) pertaining to the first embodiment.
FIG. 13 is a schematic drawing showing a method of generating the training data 40 (generating a learning group image and assigning a label) pertaining to a second embodiment.
FIG. 14 is a schematic drawing showing a method of generating the training data 40 (generating a learning group image and assigning a label) pertaining to a third embodiment.
FIG. 15 is a schematic drawing showing a method of generating the training data 40 (generating a learning group image and assigning a label) pertaining to a fourth embodiment.

## DETAILED DESCRIPTION

Embodiments of the present invention will be described below with reference to the drawings. It will be noted that the following embodiments are specific examples of the present invention and are not intended to limit the technical scope of the present invention.

<First Embodiment

(1) Product Identification System 10

(1-1) Configuration

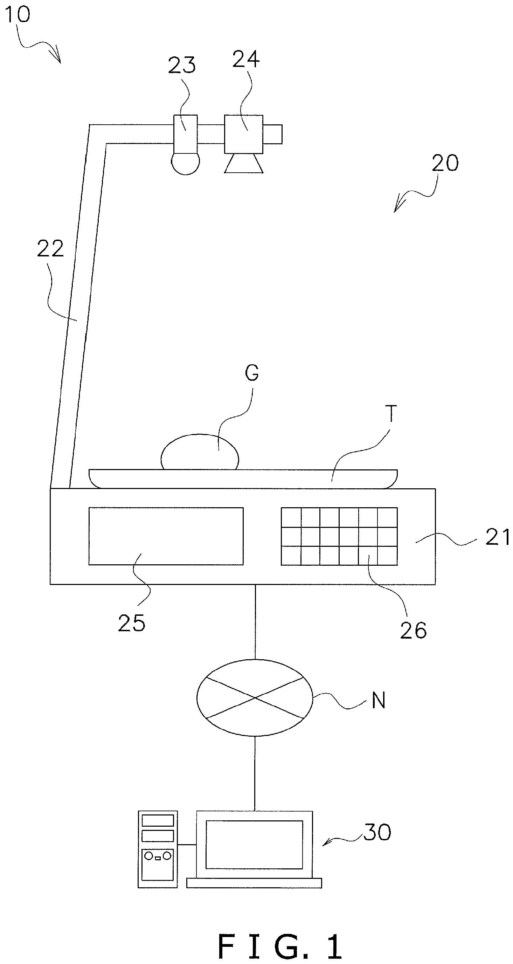

FIG. 1 is a schematic drawing showing a product identification apparatus 10. The product identification apparatus 10 identifies products G placed on a tray T. The products G typically are food products such as breads and prepared foods. The product identification apparatus 10 is installed in a checkout counter of a shop, such as a bread shop or a prepared food sales floor of a supermarket for example. The user of the product identification apparatus 10 is a clerk at those shops, for example.

The product identification apparatus 10 has an imaging device 20 and an identification computer 30. The imaging device 20 and the identification computer 30 are connected to each other via a network N. The network N here may be a LAN or a WAN. The imaging device 20 and the identification computer 30 may be installed in locations remote from each other. For example, the identification computer 30 may be configured as a cloud server. Alternatively, the imaging device 20 and the identification computer 30 may also be directly connected to each other without the intervention of the network N.

(1-1-1) Imaging Device 20

The imaging device 20 has a base 21, a support 22, a light source 23, a camera 24, a display 25, and an input unit 26. The base 21 functions as a platform on which to place the tray T. The support 22 supports the light source 23 and the camera 24. The light source 23 is for illuminating the products placed on the tray T. The camera 24 is for imaging the products G placed on the tray T. The display 25 is for displaying the identification results of the products G. The input unit 26 is for inputting the names and so forth of the products G.

(1-1-2) Identification Computer 30

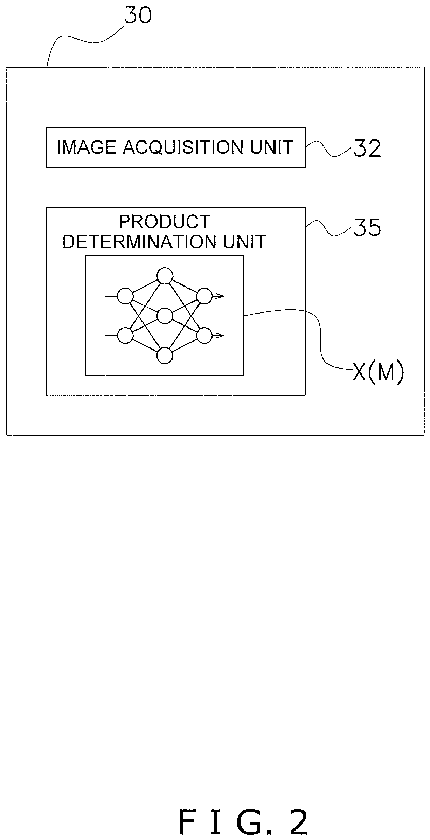

As shown in FIG. 2, the identification computer 30 functions as an image acquisition unit 32 and a product determination unit 35 by executing a dedicated program. The image acquisition unit 32 communicates with the camera 24 to acquire a still image of the tray T on which the products G have been placed. The product determination unit 35 identifies the products G included in the still image and calculates the quantities of the products G.

The product determination unit 35 has a computing unit X. The computing unit X is a function approximator capable of learning input/output relationships. The computing unit X typically is configured as a multi-layered neural network. The computing unit X acquires a learned model M as a result of prior machine learning. The machine learning typically is performed as deep learning, but it is not limited to this.

(1-2) Learning and Inference

(1-2-1) Training Data

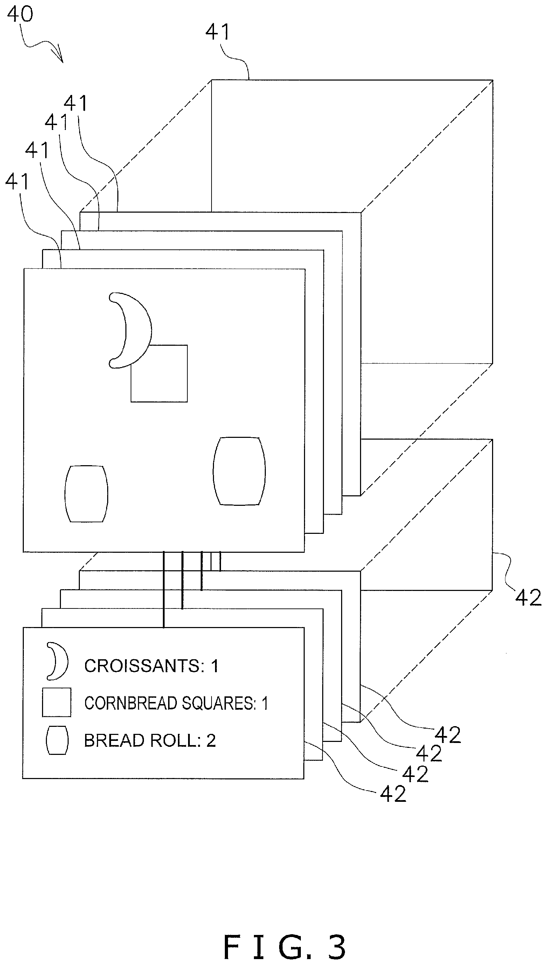

A learning phase for the computing unit X of the identification computer 30 to acquire the learned model M is performed by supervised learning. The supervised learning is executed using training data 40 shown in FIG. 3. The training data 40 comprises plural learning group images 41 and labels 42 assigned to each of the plural learning group images 41. The learning group images 41 represent examples of images that are input to the computing unit X. The labels 42 represent contents of responses that the computing unit X to which the learning group images 41 have been input should output.

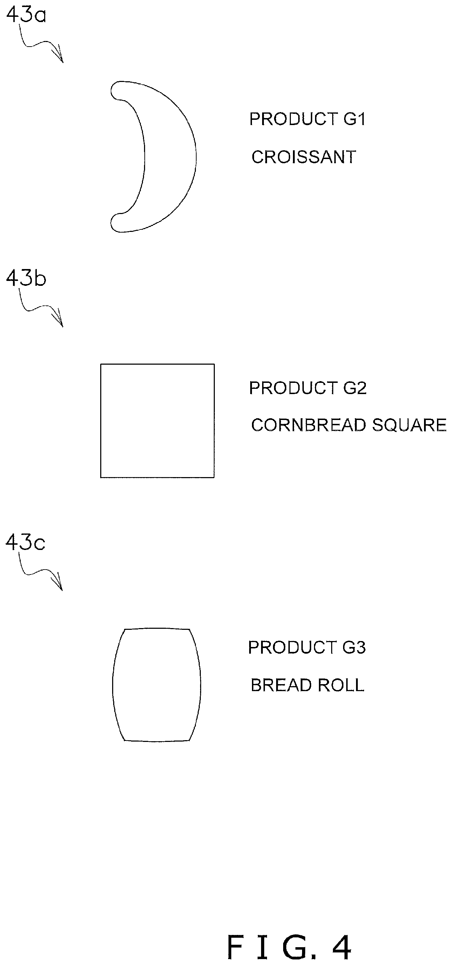

In this embodiment, each learning group image 41 comprises a combination of individual images 43a to 43c shown in FIG. 4. Each of the individual images 43a to 43c is an image in which there is one product of one type. In this example, individual image 43a is an image of a croissant (product G1), individual image 43b is an image of a cornbread square (product G2), and individual image 43c is an image of a bread roll (product G3). The learning group images 41 shown in FIG. 3 depict one or more products G1 to G3 placed on the tray T. Furthermore, in this embodiment, the labels 42 depict the quantities of each of the products G1 to G3 included in the corresponding learning group images 41.

(1-2-2) Learning Phase

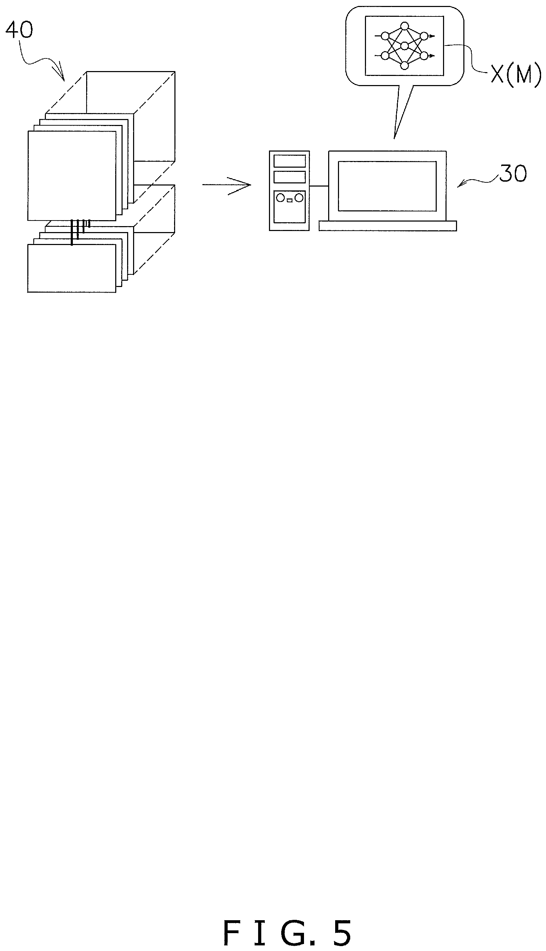

As shown in FIG. 5, in the learning phase, the computing unit X undergoes supervised learning using the training data 40. Because of this, the computing unit X acquires the learned model M by backpropagation, for example.

(1-2-3) Inference Phase

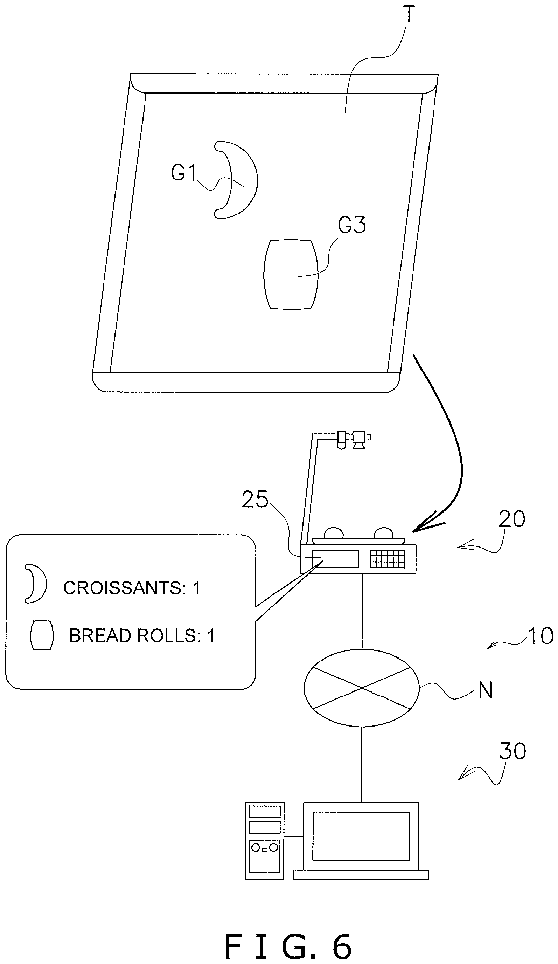

As shown in FIG. 6, the inference phase is where the product identification apparatus 10 is actually used. At a shop, a customer places on the tray T the products G he/she wants to purchase. The customer carries the tray T to the checkout counter and places it on the base 21 of the imaging device 20. The clerk who is the user activates the product identification apparatus 10. The camera 24 captures a group image of the products on the tray T. It will be noted that "group image" here also includes an image in which there is just one product. The group image captured by the camera 24 is sent via the network N to the image acquisition unit 32 of the identification computer 30. The group image is delivered to the product determination unit 35. The product determination unit 35 infers the quantities of each of the products G1 to G3 included in the group image. The result of the inference is forwarded via the network N to the imaging device 20. The result of the inference is displayed on the display 25 and is utilized in the checkout process.

(2) Training Data Generation Apparatus 50

(2-1) Configuration

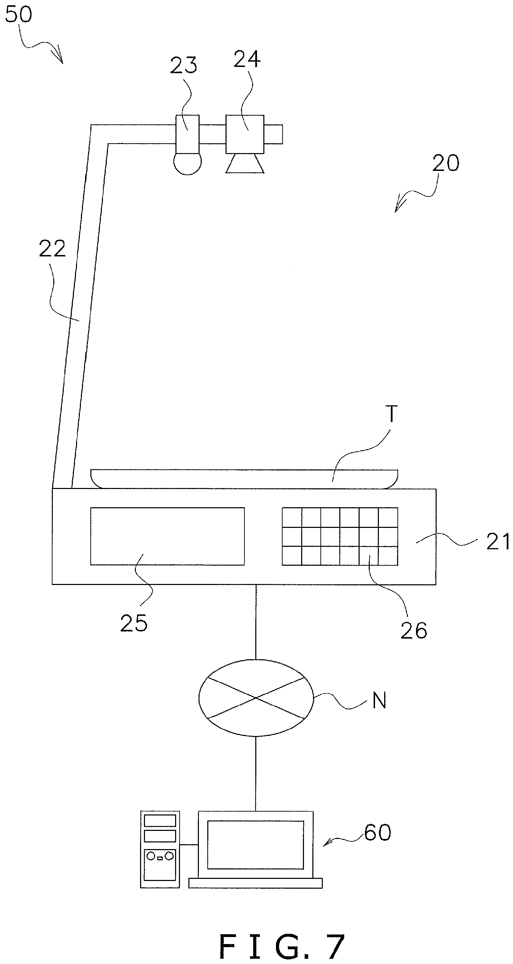

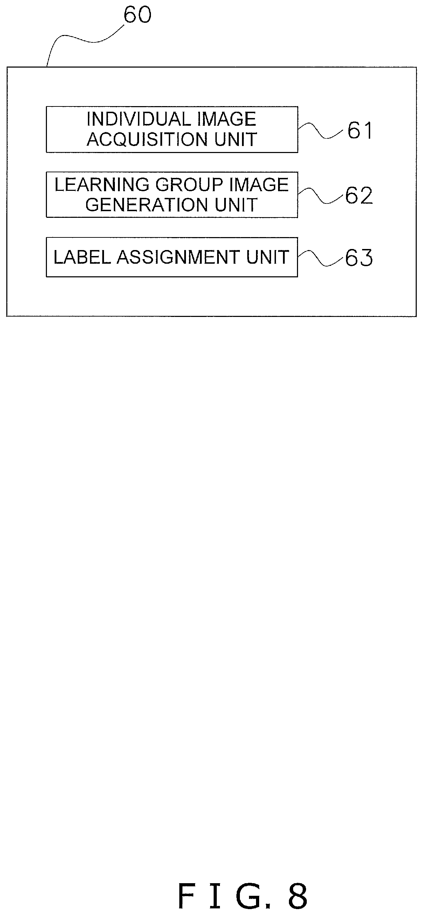

A training data generation apparatus 50 shown in FIG. 7 generates the training data 40 (see FIG. 3) used in the learning phase of the product identification apparatus 10. The training data generation apparatus 50 has an imaging device 20, which is the same as or similar to the one used in the product identification apparatus 10, and a generation computer 60. The imaging device 20 and the generation computer 60 are connected to each other via a network N. The network N here may be a LAN or a WAN. The imaging device 20 and the generation computer 60 may be installed in locations remote from each other. For example, the imaging device 20 may be installed in a kitchen. The generation computer 60 may be configured as a cloud server. Alternatively, the imaging device 20 and the generation computer 60 may also be directly connected to each other without the intervention of the network N. The generation computer 60 is a computer in which a dedicated program has been installed. As shown in FIG. 8, the generation computer 60 functions as an individual image acquisition unit 61, a learning group image generation unit 62, and a label assignment unit 63 by executing the program.

(2-2) Generation of Training Data

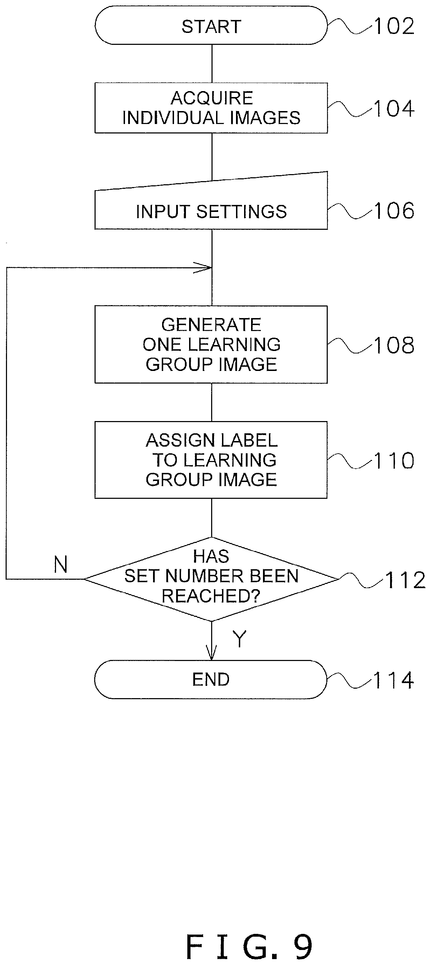

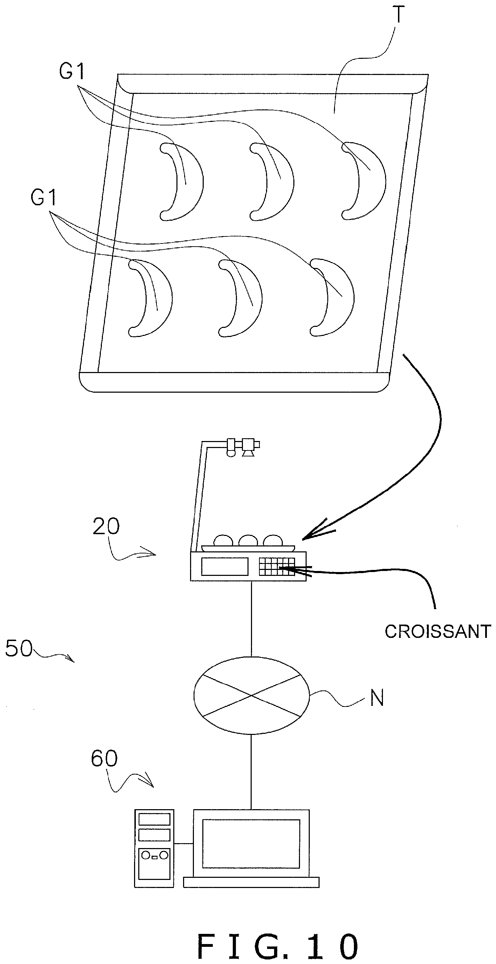

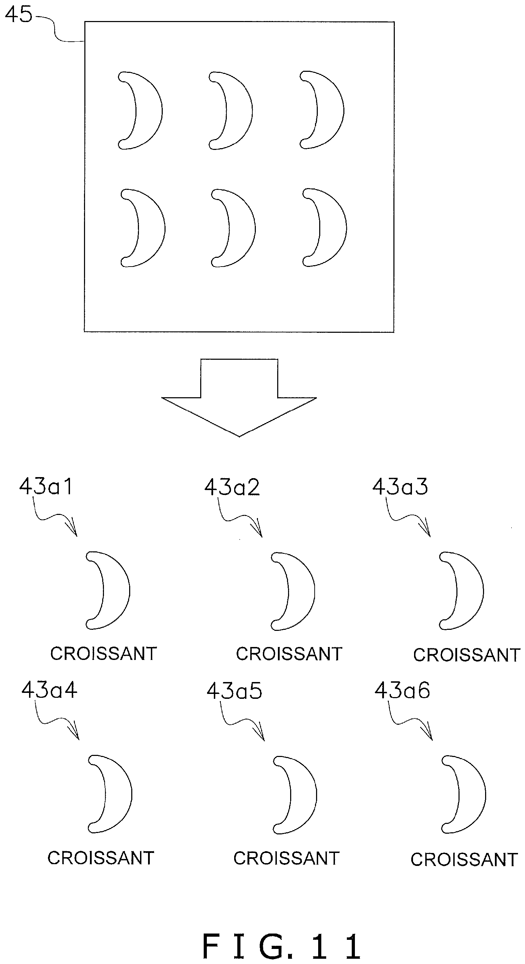

The training data generation apparatus 50 generates the training data 40 by the procedure shown in FIG. 9. First, the individual image acquisition unit 61 acquires individual images of products (step 104). Specifically, as shown in FIG. 10, a tray T on which one or more products G1 of the same type have been arranged is set in the product identification apparatus 10. Next, the name of the product G1 is input from the input unit 26. In FIG. 10, "croissant" is input as the name of the product G1. Next, a group image of the products G1 of the same type is captured. The group image is delivered to the generation computer 60. As shown in FIG. 11, the individual image acquisition unit 61 of the generation computer 60 removes the background from the group image 45 and acquires one or more individual images in association with the product name. Because of this, six individual images 43a1 to 43a6 are acquired in association with the product name "croissant." It will be noted that in a case where the individual images 43a1 to 43a6 acquired at the same time include an individual image whose size or shape is extremely different from those of the other individual images, that individual image may be discarded. This can arise, for example, in a case where two of the products G1 are improperly touching each other.

This acquisition of individual images is also performed in regard to the products G2 and G3.

Next, settings are input to the training data generation apparatus 50 (step 106). The settings are, for example, the following values.

- Number of images: How many learning group images 41 the training data 40 to be generated is to include.
- Upper limit and lower limit of overlap ratio: In relation to overlap between individual images, the upper limit and the lower limit of the ratio of the area of overlap to the area of the individual images.
- Number of individual images to be included: Up to how many individual images 43a1 to 43a6, 43b1 to 43b6, 43c1 to 43c6 one learning group image 41 is to contain.

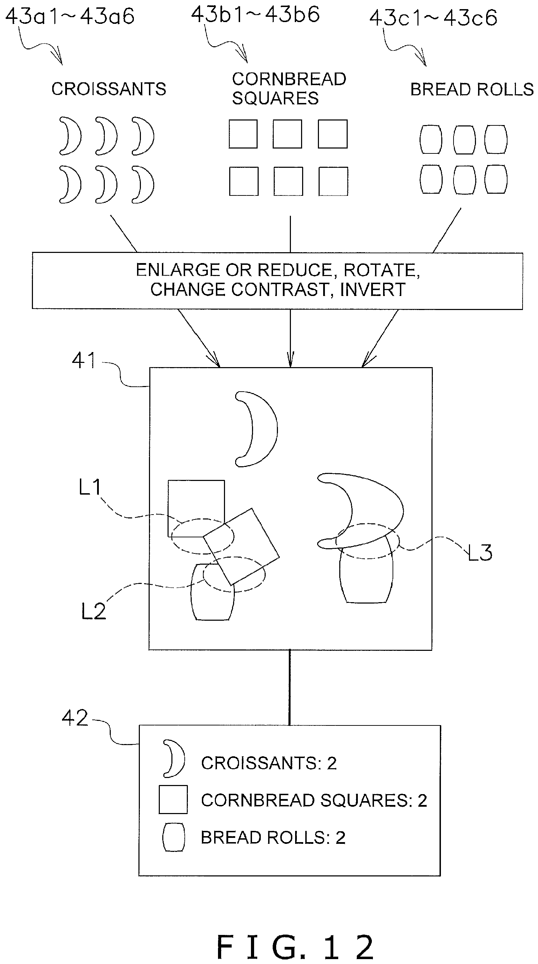

Next, the learning group image generation unit 62 generates one learning group image 41 by randomly arranging the individual images (step 108). Specifically, as shown in FIG. 12, the learning group image generation unit 62 generates one learning group image 41 using plural types of the individual images 43a1 to 43a6, 43b1 to 43b6, 43c1 to 43c6. The quantities of each of the products included and the positions of each of the individual images arranged in the learning group image 41 are randomly chosen within the ranges of the settings. When arranging the individual images, the following processes are performed.

- A process that enlarges or reduces the individual images at random rates.
- A process that rotates the individual images at random angles.
- A process that changes the contrast of the individual images at random degrees.
- A process that randomly inverts the individual images.

These processes are intended to reproduce individual differences that are often seen in food products. The individual differences are differences that arise in regard to the same product, such as size, shape, and color (the extent to which bread is baked), for example. Moreover, variations in the arrangement directions of the products G can be handled by the rotation process.

Moreover, as shown in FIG. 12, when arranging the individual images, overlapping between one individual image and another individual image is allowed. Overlapping is occurring at place L1, place L2, and place L3 in the learning group image 41. The overlapping is done so that the overlap ratio falls between the upper limit and the lower limit of the overlap ratio that was input in step 106. Typically, overlapping is configured to occur at a fixed ratio. Some of the plural learning group images 41 include individual images that overlap.

Next, the label assignment unit 63 generates the label 42 and assigns the label 42 to the learning group image 41 (step 110). Specifically, the label assignment unit 63 generates the label 42 from the record of the individual images arranged in the learning group image 41. The label 42 in this embodiment is the quantities of each of the products G1 to G3. The label 42 is assigned to the learning group image 41; that is, it is associated and recorded with the learning group image 41.

The training data generation apparatus 50 repeats step 108 and step 110 until the number of the learning group images 41 to which the labels 42 have been assigned reaches the number that was set. Because of this, numerous sets of the learning group images 41 and the labels 42 are generated.

(3) Characteristics

(3-1)

At least some of the plural learning group images 41 are learning group images in which the individual images 43a1 to 43a6, 43b1 to 43b6, 43c1 to 43c6 at least partially overlap each other. Consequently, according to the method of generating the training data 40, the program for generating the training data 40, and the training data generation apparatus 50 according to this disclosure, the training data 40 configuring the computing unit X capable of identifying the overlapping products G can be obtained.

(3-2)

The training data 40 includes as the labels the quantities of each of the products G. Consequently, the computing unit X can be trained to be able to identify the quantities of the products G.

(3-3)

The degree of overlap between the individual images 43a1 to 43a6, 43b1 to 43b6, 43c1 to 43c6 in the learning group images 41 is designated. Consequently, learning by the computing unit X suited to degrees of overlap that can realistically occur is possible.

(3-4)

Before being arranged in the learning group image 41, the individual images 43a1 to 43a6, 43b1 to 43b6, 43c1 to 43c6 are subjected to enlargement/reduction, rotation, changes in contrast, and inversion. Consequently, the volume of the training data 40 increases, so the recognition accuracy of the computing unit X can be improved.

(3-5)

The recognition accuracy of the computing unit X can be improved in regard to food products.

(3-6)

According to the product identification apparatus 10 according to this disclosure, the training data 40 including the individual images 43a1 to 43a6, 43b1 to 43b6, 43c1 to 43c6 of the plural products G that overlap each other is used in the learning by the neural network. Consequently, the recognition accuracy of the neural network is improved.

<Second Embodiment

(1) Generation of Training Data

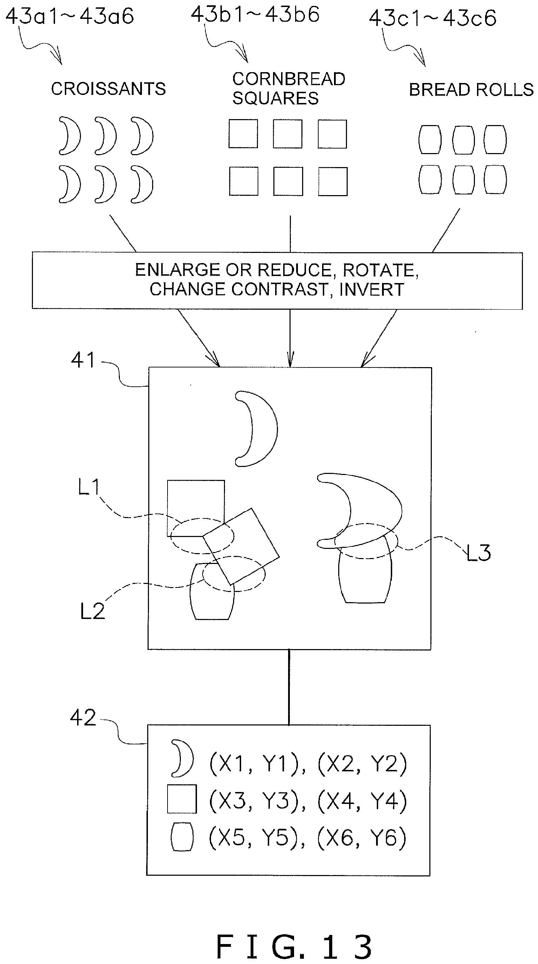

FIG. 13 shows a method of generating the training data 40 pertaining to a second embodiment of this disclosure. The method of generating the training data 40 pertaining to this embodiment is the same as that of the first embodiment except that the format of the label 42 is different.

In this embodiment, the label 42 includes coordinates of centroids of the individual images 43a1 to 43a6, 43b1 to 43b6, 43c1 to 43c6 arranged in the learning group image 41. In step 110 of FIG. 9, this label 42 is assigned to the learning group image 41.

The product identification apparatus 10 that has acquired the learned model M using this training data 40 first obtains the coordinates of the centroids of each of the products G in the inference phase. Conversion from the coordinates of the centroids to the quantities of the products G is performed by another dedicated program stored in the identification computer 30.

(2) Characteristics

The training data 40 includes as the labels 42 the coordinates of the centroids of the individual images 43a1 to 43a6, 43b1 to 43b6, 43c1 to 43c6. Consequently, the computing unit X can be trained to not mistake plural products G for a single product.

<Third Embodiment

(1) Generation of Training Data

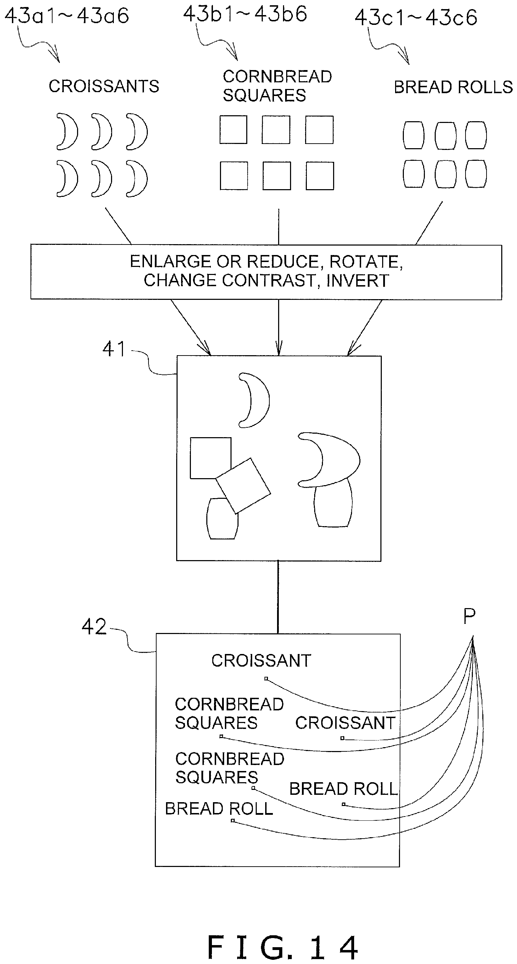

FIG. 14 shows a method of generating the training data 40 pertaining to a third embodiment of this disclosure. The method of generating the training data 40 pertaining to this embodiment is the same as that of the first embodiment except that the format of the label 42 is different.

In this embodiment, the label 42 is a replacement image in which the individual images 43a1 to 43a6, 43b1 to 43b6, 43c1 to 43c6 included in the learning group image 41 are replaced with representative images. In this embodiment, the representative images are centroid pixels P of the individual images 43a1 to 43a6, 43b1 to 43b6, 43c1 to 43c6. In step 110 of FIG. 9, this label 42 is assigned to the learning group image 41.

The format of the label 42 will be further described. The label 42 is, for example, an image of the same size as the learning group image 41. In a case where the learning group image 41 has X×Y number of pixels arrayed in X columns and Y rows, the label 42 also has X×Y number of pixels arrayed in X columns and Y rows. The pixels of the label 42 are not configured by RGB but are configured as N-dimensional vectors. Here, N is the number of the types of the products G registered in the training data generation apparatus 50 (e.g., N = 3 in a case where the products G1, G2, G3 are registered). A pixel at x-th column and y-th row is given as the following vector.

[Formula 1]

$$\boldsymbol{A}(x,y) = (a_{xy1}, a_{xy2}, \quad \dots a_{xyi}, \quad \dots a_{xyN})$$

Here, $a_{xyi}$ is the number of the products G of the i-th type at coordinate (x, y), that is, the number of centroid pixels P corresponding to the products G of the i-th type existing at coordinate (x, y).

The product identification apparatus 10 that has acquired the learned model M using this training data 40 first obtains the replacement images in the inference phase. The replacement images are also configured by pixels given by vector A. Conversion from the replacement images to the quantities of the products G is performed by another dedicated program stored in the identification computer 30. For example, the program finds, by the following formula, quantities Hi of the products G of the i-th type included in the learning group image 41.

[Formula 2]

$$H_i = \sum_{x=1}^{X} \sum_{y=1}^{Y} a_{xyi}$$

(2) Characteristics

The training data 40 includes as the label 42 the replacement images in which the individual images 43a1 to 43a6, 43b1 to 43b6, 43c1 to 43c6 included in the learning group image 41 have been replaced with the centroid pixels P. Consequently, the computing unit X can be trained to not mistake plural products G for a single product.

(3) Example Modifications

(3-1)

In the third embodiment, one centroid pixel P is used as a representative image depicting one individual image.

Instead of this, a region comprising plural pixels representing the centroid position may also be used as a representative image depicting one individual image. In this case, the above formula is appropriately modified, by means such as multiplying the coefficient for example, so as to be able to accurately calculate the quantities Hi of the products G of the i-th type.

(3-2)

In the third embodiment, the centroid pixel P is used as the representative image. Instead of this, the representative image may also be another pixel. For example, the representative image may also be a pixel at the center point of a quadrangular region surrounding the individual image (where each of the four sides of the region pass through the top, bottom, right, and left endpoints of the individual image). Alternatively, the representative image may also be the pixel at one vertex (e.g., the lower left vertex) of the quadrangular region surrounding the individual image.

<Fourth Embodiment

(1) Generation of Training Data

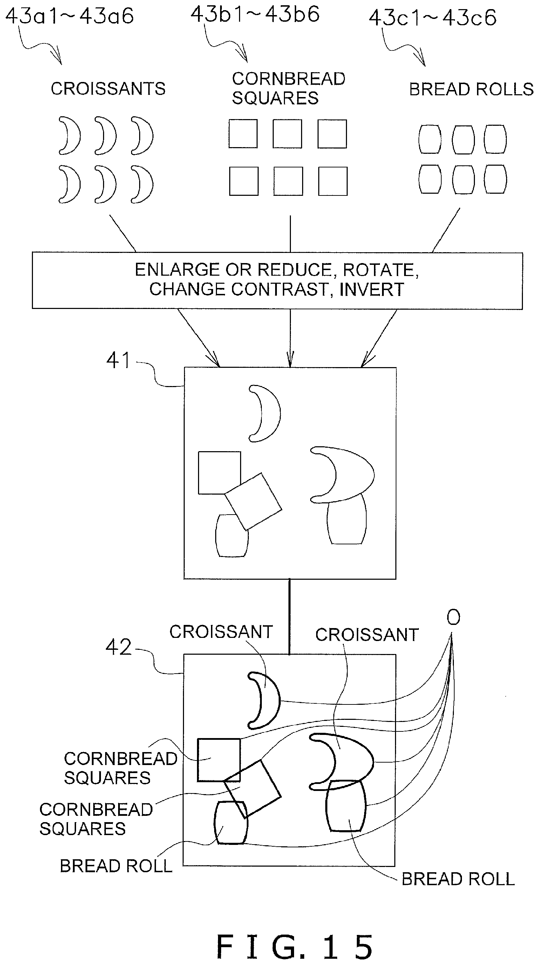

FIG. 15 shows a method of generating the training data 40 pertaining to a fourth embodiment of this disclosure. The method of generating the training data 40 pertaining to this embodiment is the same as that of the first embodiment except that the format of the label 42 is different.

In this embodiment, the label 42 is a replacement image in which the individual images 43a1 to 43a6, 43b1 to 43b6, 43c1 to 43c6 included in the learning group image 41 have been replaced with representative images. In this embodiment, the representative images are outline images O of the individual images 43a1 to 43a6, 43b1 to 43b6, 43c1 to 43c6. In step 110 of FIG. 9, this label 42 is assigned to the learning group image 41.

The product identification apparatus 10 that has acquired the learned model M using this training data 40 first obtains the replacement images in the inference phase. Conversion from the replacement images to the quantities of the products G is performed by another dedicated program stored in the identification computer 30.

(2) Characteristics

The training data 40 includes as the labels 42 the replacement images in which the individual images 43a1 to 43a6, 43b1 to 43b6, 43c1 to 43c6 included in the learning group image 41 have been replaced with the outline images O of the individual images 43a1 to 43a6, 43b1 to 43b6, 43c1 to 43c6. Consequently, the computing unit X can be trained to not mistake plural products for a single product.

**REFERENCE SIGNS LIST**

| | |
|---|---|
| 10 | Product Identification Apparatus |
| 20 | Imaging Device |
| 30 | Identification Computer |
| 40 | Training Data |
| 41 | Learning Group Images |
| 42 | Labels |
| 43a (43a1 to 43a6) | Individual Images |
| 43b (43b1 to 43b6) | Individual Images |
| 43c (43c1 to 43c6) | Individual Images |
| 45 | Group Image |
| 50 | Training Data Generation Apparatus |
| 60 | Generation Computer |
| 61 | Individual Image Acquisition Unit |
| 62 | Learning Group Image Generation Unit |
| 63 | Label Assignment Unit |
| 104 | Step |
| 106 | Step |
| 108 | Step |
| 110 | Step |

| | |
|---|---|
| G (G1 to G3) | Products |
| L1 to L3 | Places of Overlap |
| M | Model |
| N | Network |
| O | Outline Images |
| P | Centroid Pixels |
| X | Computing Unit |

## CITATION LIST

### Patent Literature

Patent Document 1: JP-A No. 2017-27136

## Claims

1. A method of generating training data used to generate a computing unit for a product identification apparatus that computes, from a group image in which there are one or more types of products, the quantities of each type of the products included in the group image,
wherein
the training data includes plural learning group images and labels assigned to each of the plural learning group images,
the training data generation method comprises

    a first step of acquiring individual images in each of which there is one product of one type and
    a second step of generating the plural learning group images including one or more of the products by randomly arranging the individual images, and

    the plural learning group images generated in the second step include learning group images in which the individual images at least partially overlap each other.

2. The training data generation method according to claim 1, further comprising a third step of assigning, as the labels to the learning group images, the quantities and/or the positional information of each type of the products included in the learning group images generated in the second step.

3. The training data generation method according to claim 1 or 2, wherein the labels including information that specifies each type of the products are generated.

4. The training data generation method according to any one of claims 1 to 3, further comprising a third step of assigning, as the labels to the learning group images, coordinates of centroids corresponding to each of the individual images included in the learning group images generated in the second step.

5. The training data generation method according to any one of claims 1 to 4, further comprising a third step of assigning, as the labels to the learning group images, replacement images in which each of the individual images included in the learning group images generated in the second step have been replaced with corresponding representative images.

6. The training data generation method according to claim 5, wherein the representative images are pixels representing centroids of each of the individual images.

7. The training data generation method according to claim 5, wherein the representative images are outlines of each of the individual images.

8. A method of generating training data configured to count a quantity of each product included in an image including one or more different products, the method comprising:

    a first step of acquiring information that specifies individual images of each product included in the one or more products and the products;

a second step of generating plural learning group images such that each learning group image includes the one or more products by randomly arranging the individual images; and

a third step of generating, for each learning group image, a label including information that specifies each product corresponding to each individual image arranged in each learning group image included in the plural learning group images and information that specifies a quantity and/or a position of each product in each learning group image;

wherein, in each of the plural learning group images generated in the second step, at least part of the individual images partially overlap each other.

**9.** The training data generation method according to claim 8, wherein, in the labels, the information that specifies the quantity and/or the position of each product in each learning group image is information that specifies a coordinate or a pixel of a center of gravity of each individual image included in each learning group image.

**10.** The training data generation method according to claim 8, wherein, in the labels, the information that specifies the quantity and/or the position of each product in each learning group image is information that specifies pixels forming an outline of the product in each individual image included in each learning group image.

**11.** The training data generation method according to any one of claims 1 to 10, wherein in the second step a designation regarding an upper limit and/or a lower limit of an overlap ratio defined by the ratio of an area of overlap with respect to the area of the individual images is received.

**12.** The training data generation method according to any one of claims 1 to 11, wherein in the second step at least one of
a process that enlarges or reduces the individual images at random rates,
a process that rotates the individual images at random angles,
a process that changes the contrast of the individual images at random degrees, and
a process that randomly inverts the individual images
is performed per individual image when arranging the individual images.

**13.** The training data generation method according to any one of claims 1 to 12, wherein the products are food products.

**14.** The training data generation method according to any one of claims 1 to 13, wherein information that specifies each product included in the learning group images and the quantity and/or positional information of the products in the learning group images are output based on the label generated for an arbitrary learning group image included in the one or more learning group images.

**15.** The training data generation method according to any one of claims 1 to 14, further comprising an output step of outputting and/or writing in a storage medium the training data including at least the plural learning group images generated in the second step and the respective labels for the plural learning group images.

**16.** An apparatus for generating training data used to generate a computing unit for a product identification apparatus that computes, from a group image in which there are one or more types of products, the quantities of each type of the products included in the group image,
wherein
the training data includes plural learning group images and labels assigned to each of the plural learning group images,
the training data generation apparatus comprises

an individual image acquisition unit that acquires individual images in each of which there is one product of one type and

a learning group image generation unit that generates the plural learning group images including one or more of the products by randomly arranging the individual images, and

the learning group image generation unit causes the individual images to at least partially overlap each other.

**17.** A product identification apparatus that computes, from a group image in which there are one or more types of products, the quantities of each type of the products included in the group image,
wherein
the product identification apparatus comprises a camera and a neural network that processes output from the camera,
the neural network learns using the training data generated using the training data generation method according to any one of claims 1 to 15.

10
23
24
20
22
G
T
21
25
26
N
30

F I G. 1

30
IMAGE ACQUISITION UNIT
32
PRODUCT DETERMINATION UNIT
35
X(M)

F I G. 2

40
41
41
41
41
41
CROISSANTS: 1
CORNBREAD SQUARES: 1
BREAD ROLL: 2
42
42
42
42
42

F I G. 3

43a
PRODUCT G1
CROISSANT
43b
PRODUCT G2
CORNBREAD SQUARE
43c
PRODUCT G3
BREAD ROLL

FIG. 4

40
X(M)
30

F I G. 5

T
G1
G3
25
20
CROISSANTS: 1
BREAD ROLLS: 1
10
N
30

F I G. 6

50
23
24
20
22
T
21
25
26
N
60

F I G. 7

60
INDIVIDUAL IMAGE ACQUISITION UNIT
61
LEARNING GROUP IMAGE GENERATION UNIT
62
LABEL ASSIGNMENT UNIT
63

F I G. 8

START
102
ACQUIRE INDIVIDUAL IMAGES
104
INPUT SETTINGS
106
GENERATE ONE LEARNING GROUP IMAGE
108
ASSIGN LABEL TO LEARNING GROUP IMAGE
110
HAS SET NUMBER BEEN REACHED?
112
N
Y
END
114

FIG. 9

T
G1
G1
20
CROISSANT
50
N
60

F I G. 1 0

45
43a1
43a2
43a3
CROISSANT
CROISSANT
CROISSANT
43a4
43a5
43a6
CROISSANT
CROISSANT
CROISSANT

FIG. 11

43a1~43a6
43b1~43b6
43c1~43c6
CROISSANTS
CORNBREAD SQUARES
BREAD ROLLS
ENLARGE OR REDUCE, ROTATE, CHANGE CONTRAST, INVERT
41
L1
L2
L3
42
CROISSANTS: 2
CORNBREAD SQUARES: 2
BREAD ROLLS: 2

FIG. 12

43a1~43a6
43b1~43b6
43c1~43c6
CROISSANTS
CORNBREAD SQUARES
BREAD ROLLS
ENLARGE OR REDUCE, ROTATE, CHANGE CONTRAST, INVERT
41
L1
L2
L3
42
(X1, Y1), (X2, Y2)
(X3, Y3), (X4, Y4)
(X5, Y5), (X6, Y6)

FIG. 13

43a1~43a6
43b1~43b6
43c1~43c6
CROISSANTS
CORNBREAD SQUARES
BREAD ROLLS
ENLARGE OR REDUCE, ROTATE, CHANGE CONTRAST, INVERT
41
42
P
CROISSANT
CORNBREAD SQUARES
CROISSANT
CORNBREAD SQUARES
BREAD ROLL
BREAD ROLL

FIG. 14

43a1~43a6
43b1~43b6
43c1~43c6
CROISSANTS
CORNBREAD SQUARES
BREAD ROLLS
ENLARGE OR REDUCE, ROTATE, CHANGE CONTRAST, INVERT
41
42
CROISSANT
CROISSANT
O
CORNBREAD SQUARES
CORNBREAD SQUARES
BREAD ROLL
BREAD ROLL

FIG. 15

Europäisches
Patentamt
European
Patent Office
Office européen
des brevets

# EUROPEAN SEARCH REPORT

Application Number
EP 19 20 8349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK FOLLMANN ET AL: "MVTec D2S: Densely Segmented Supermarket Dataset", ARXIV.ORG, CORNELL UNIVERSITY LIBRARY, 201 OLIN LIBRARY CORNELL UNIVERSITY ITHACA, NY 14853, 25 July 2018 (2018-07-25), XP081108096, * the whole document * ----- | 1-17 | INV. G06K9/62 |

TECHNICAL FIELDS SEARCHED (IPC)
G06K

The present search report has been drawn up for all claims

| Place of search | Date of completion of the search | Examiner |
|---|---|---|
| The Hague | 4 March 2020 | Koutroumpas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017027136 A